(19) Europäisches Patentamt
European Patent Office
Office européen des brevets

(11) **EP 1 788 322 A1**

(12) **EUROPÄISCHE PATENTANMELDUNG**

(43) Veröffentlichungstag:
23.05.2007 Patentblatt 2007/21

(51) Int Cl.:
*F24J 2/54* (2006.01)   *H01L 31/042* (2006.01)
*F24J 2/40* (2006.01)

(21) Anmeldenummer: 06022871.5

(22) Anmeldetag: 02.11.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 19.11.2005 DE 102005055258

(71) Anmelder: Goldbeck Solar GmbH
69493 Hirschberg an der Bergstrasse (DE)

(72) Erfinder: Goldbeck, Joachim
69469 Weinheim (DE)

(74) Vertreter: Müller, Frank
ter Meer Steinmeister & Partner GbR
Artur-Ladebeck-Straße 51
D-33617 Bielefeld (DE)

(54) **Montierung für eine Gruppe von Solarmodulen**

(57) Die Erfindung betrifft eine Montierung für eine Gruppe von Solarmodulen, die auf einer ebenen Grundfläche montiert sind und gegenüber der Grundfläche geneigt sind. Ein Drehgestell bildet die Grundfläche und ist durch einen Antrieb drehbar auf einer Basis angeordnet, wobei die Drehachse eine Flächennormale der Grundfläche bildet. Die Erfindung betrifft ferner eine Solaranlage mit einer Anzahl solcher Montierungen und ein Verfahren zu Steuerung einer derartigen Montierung.

Fig. 1

EP 1 788 322 A1

## Beschreibung

Die vorliegende Erfindung betrifft eine Montierung für eine Gruppe von Solarmodulen, die auf einer gemeinsamen Montagefläche montiert sind und deren Modulflächen in mindestens zwei verschiedenen Ebenen liegen, die gegenüber der Montagefläche geneigt sind, sowie eine Solaranlage mit einer Anzahl solcher Montierungen und ein Verfahren zur Steuerung einer derartigen Montierung.

Solarmodule zur Nutzung der Sonnenenergie haben in den letzten Jahren weite Verbreitung gefunden, insbesondere in Form von Photovoltaik-Modulen, welche die Strahlungsenergie der Sonne in elektrischen Strom umwandeln. Solche Solarmodule lassen sich als flache Paneele in größerer Zahl auf einer Montagefläche montieren, beispielsweise auf dem Dach eines Gebäudes, das mit der erzeugten elektrischen Energie versorgt werden soll. Zur Verbesserung der Energieausbeute lassen sich die Solarmodule in einem geeigneten Neigungswinkel in bezug auf die Montagefläche anbringen, so dass die Modulflächen in verschiedenen Ebenen liegen, die jeweils gegenüber der Montagefläche geneigt sind.

Die Energieausbeute der Solarmodule ist von ihrer Orientierung in Bezug auf die Richtung der Sonneneinstrahlung abhängig, also nicht nur vom Neigungswinkel, sondern auch von ihrer Drehrichtung in Bezug auf den Horizont, dem sog. Azimut. Es existieren daher Nachführungen, durch welche sich einzelne Module durch Drehen um eine oder zwei Achsen optimal auf die Sonne ausrichten lassen. Für Anlagen der oben genannten Art, die eine große Zahl von Solarmodulen umfassen, wäre jedoch eine entsprechend große Anzahl solcher Nachführungen erforderlich, so dass eine solche Lösung zur Steigerung der Ausbeute unwirtschaftlich und nicht praktikabel ist. Die Montagefläche einer Anlage mit individuell nachgeführten Solarmodulen läßt sich lediglich mit einer Bestückungsdichte belegen, die etwa einem Drittel der Leistung einer vergleichbaren Anlage mit fest installierten Modulen entspricht, so daß die Dachfläche nicht optimal genutzt wird. Ferner stellt sich in diesem Fall das Problem, dass mit zunehmender Bestückungsdichte die Gefahr einer gegenseitigen Abschattung der Module steigt, insbesondere bei sehr niedrigem Sonnenstand. Ebenfalls bekannte Nachführungen zur synchronen Ausrichtung einer relativ kleinen Zahl von Solarmodulen lassen sich hingegen aus architektonischen und statischen Gründen nicht ohne weiteres auf Hausdächern montieren, da aufgrund der Höhe des entstehenden Aufbaus die auftretenden Windlasten auf das Gebäude zu groß wären.

Aus den zuvor genannten Gründen wurde daher bisher zugunsten einer dichten Bestückung der Montagefläche auf eine Nachführbarkeit verzichtet, wobei in Kauf genommen werden muß, dass die Energieausbeute der einzelnen Module bei ungünstiger Ausrichtung zur Sonne gering bleibt.

Aufgabe der vorliegenden Erfindung ist es daher, eine Montierung für eine Gruppe von Solarmodulen der eingangs genannten Art zu schaffen, die eine hohe Bestückungsdichte auf der Montagefläche bei gleichzeitiger Steigerung der Energieausbeute der einzelnen Module der Gruppe erlaubt. Gemäß einer weiteren Aufgabe der Erfindung soll sich diese Montierung zur Installation auf einem Gebäudedach eignen, ohne daß statische Probleme wie etwa zu hohe Windlasten auftreten.

Diese Aufgabe wird erfindungsgemäß durch eine Montierung mit den Merkmalen des Anspruchs 1 gelöst.

Die erfindungsgemäße Montierung umfaßt ein Drehgestell, das durch einen Antrieb drehbar auf einer Basis angeordnet ist, die fest auf dem Untergrund der Anlage montiert sein kann. Das Drehgestell bildet die Montagefläche, auf der die Solarmodule montiert sind, so dass bei einer Drehung des Drehgestells auf der Basis die gesamte Gruppe von Solarmodulen gleichzeitig gedreht wird.

Durch diese Anordnung, bei welcher eine synchrone Drehung der Solarmodule erfolgt, ist eine Nachführung der gesamten Solarmodul-Gruppe möglich. Hierbei können die Module verhältnismäßig dicht auf der Montagefläche angeordnet sein, beispielsweise in hintereinander liegenden Reihen, während das Drehgestell durch den Antrieb in eine Position drehbar ist, in der beim augenblicklichen Sonnenstand eine maximale Ausbeute der Solarmodule erzielt wird. Bei relativ hohen Sonnenständen lassen sich die Module beispielsweise unmittelbar auf die Sonne ausrichten, während es bei sehr niedrigem Sonnenstand vorgezogen wird, das Drehgestell so zu orientieren, dass eine Abschattung hintereinander liegender Reihen vermieden wird. Diese Art der Montierung ermöglicht es, trotz einer hohen Besetzungsdichte der Montagefläche Abschattungseffekte weitgehend zu vermeiden, während zu Tageszeiten mit hohem Sonnenstand eine Nachführung der Solarmodul-Gruppe der Montierung ohne weiteres möglich ist, was zur Steigerung der Effizienz der Anlage beiträgt.

Da die Module wie bei einer feststehenden Anordnung auf der Montagefläche verteilt sein können, bleibt die Gesamthöhe der Montierung gering. Daher ist eine Montage auf einem Gebäudedach ohne weiteres möglich, ohne daß kritische Windlasten an der Anlage auftreten.

Vorteilhafte Ausgestaltungen der erfindungsgemäßen Montierung ergeben sich aus den Unteransprüchen 2 bis 11. Anspruch 12 betrifft eine Solaranlage, die eine Anzahl mehrerer Montierungen der erfindungsgemäßen Art umfaßt. Während die Unteransprüche 13 bis 17 Ausgestaltungen dieser Anlage betreffen, betreffen die Ansprüche 18 und 19 ein Verfahren zur Steuerung der erfindungsgemäßen Montierung für eine Gruppe von Solarmodulen.

Im folgenden werden bevorzugte Ausführungsbeispiele der Erfindung anhand der beigefügten Zeichnung näher erläutert.

Fig. 1 u. 2    sind perspektivische Ansichten einer Ausführungsform der erfindungsgemäßen Montierung für eine Gruppe von Solarmodulen;

Fig. 3    ist eine Detailansicht von Fig. 1 zur Erläuterung geometrischer Winkelbeziehungen;

Fig. 4 u. 5    sind Diagramme zur Erläuterung der Funktionsweise der Montierung aus den Fig. 1 bis 3;

Fig. 6    ist eine Draufsicht auf eine Solaranlage, die eine Anzahl erfindungsgemäßer Montierungen umfaßt;

Fig. 7    ist eine Draufsicht auf eine zweite Ausführungsform einer Solaranlage mit erfindungsgemäßen Montierungen;

Fig. 8    ist eine Draufsicht auf eine Solaranlage mit Montierungen, deren Winkelstellung gegenüber den Fig. 6 und 7 verändert ist; und

Fig. 9    ist ein Diagramm zur Erläuterung der Funktionsweise der Anordnung aus Fig. 8.

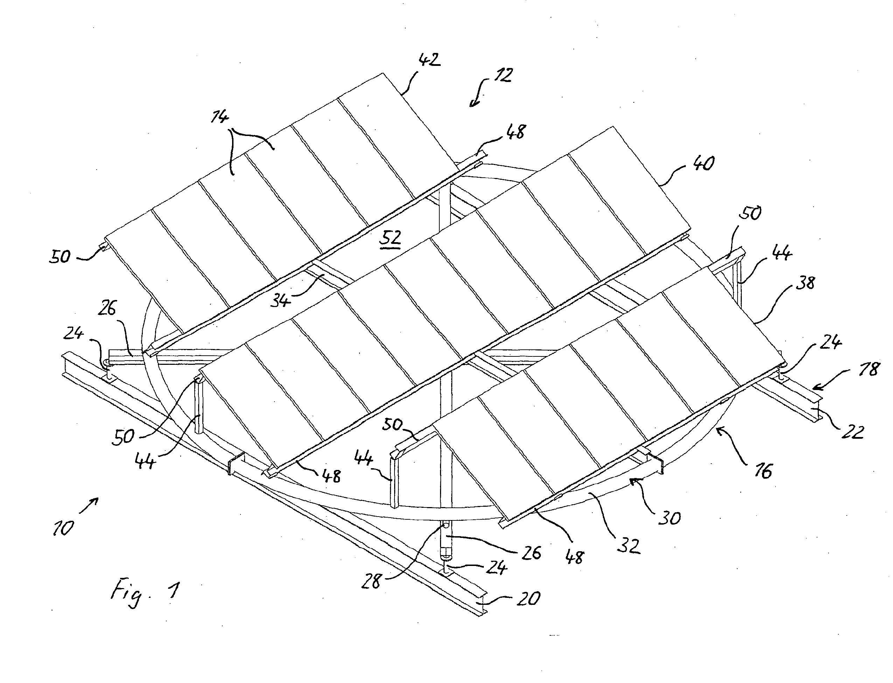

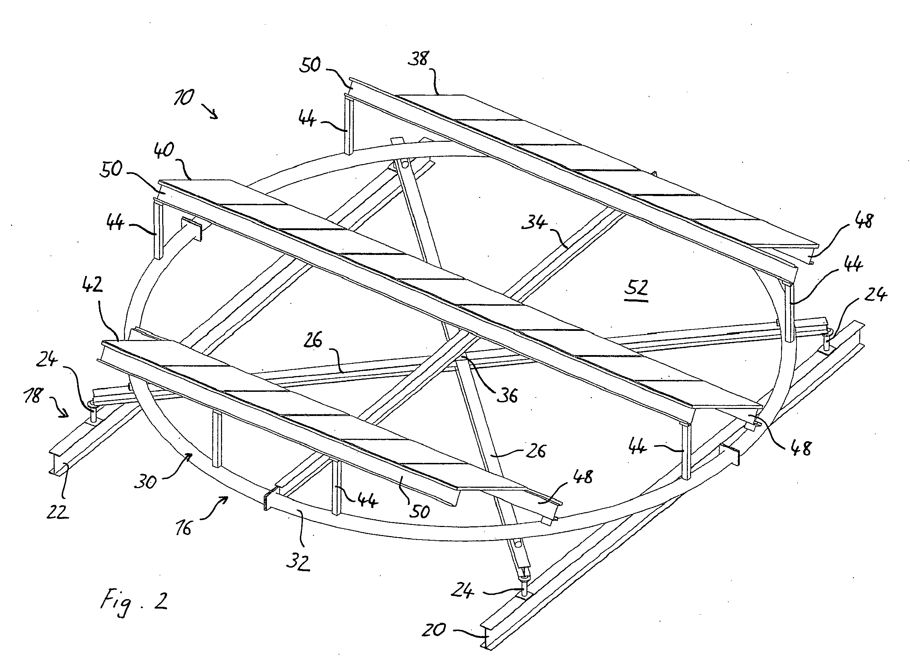

Die in den Fig. 1 und 2 gezeigte Montierung 10 für eine Gruppe 12 von Solarmodulen 14 umfaßt ein Drehgestell 16, das drehbar auf einer feststehend montierten Basis 18 angeordnet ist. Bei den Solarmodulen 14 handelt es sich um bekannte Photovoltaik-Module in Form von rechteckigen flachen Solarpaneelen, die dazu vorgesehen sind, auf die Solarmodul-Fläche fallende Sonneneinstrahlung in elektrische Energie umzuwandeln. Die Module 14 sind zu diesem Zweck auf nicht dargestellte Weise an elektrische Einrichtungen zur Erzeugung, Umwandlung, Weiterleitung und Speicherung der elektrischen Energie angeschlossen, die im wesentlichen bekannt sind, so dass auf ihre Beschreibung an dieser Stelle verzichtet wird.

Die Basis 18 umfaßt zwei parallel angeordnete, fest montierte Stahlschienen 20,22, die beispielsweise auf einem Flachdach angebracht sein können. Vorteilhafterweise können jedoch auch ohnehin vorhandene Konstruktionsteile eines Dachs bzw. Gebäudes wie etwa die Dachbinder als Schienen 20,22 genutzt werden, so dass die Zahl der zu montierenden Teile sowie die statische Last verringert wird. Auf den Oberseiten der Schienen 20,22 sind vier Konsolen 24 angeordnet, die zwei einander senkrecht kreuzende Diagonalträger 26 tragen, die jeweils mit den Schienen 20,22 einen Winkel von 45° einschliessen. Bei der vorstehend beschriebenen Nutzung der Dachbinder als Schienen 20,22 können die Konsolen 24 die Dachhaut durchdringen, welche die Dachbinder verdeckt. Die beiden Diagonalträger 26 tragen an jedem ihrer Enden ein Rollenlager 28. Auf diesen vier Rollenlagern 28 liegt das Drehgestell 16 auf.

Das Drehgestell 16 umfaßt einen kreisförmigen Schienenkranz 30, der aus vier viertelkreisförmig gebogenen, an ihren Enden miteinander verschweissten Rohrsegmenten 32 zusammengesetzt ist. Ein Mittelträger 34, der sich zwischen zwei gegenüberliegenden Umfangspunkten des Schienenkranzes 30 erstreckt und dessen Mittelpunkt schneidet, stabilisiert den Schienenkranz 30. Ein nicht dargestellter Antrieb, der einen am Kreuzungspunkt 36 (siehe Fig. 2) der Diagonalträger 26 fest angebrachten Motor umfasst, kann mittels einer durch den Motor angetriebenen Welle am Mittelträger 34 angreifen und ein Drehmoment auf diesen übertragen, so dass der Schienenkranz 30 auf den Rollenlagern 28 gleitend in eine Drehung um eine Achse versetzt wird, die den Kreuzungspunkt 36 senkrecht schneidet. Gegebenenfalls kann eine Stabilisierung dieser Drehbewegung durch zusätzliche Führungsrollen erfolgen, die seitlich oder von oben an dem Schienenkranz 30 anliegen. Alternativ zu einem Antrieb im Schienenkranz-Mittelpunkt sind auch Antriebe denkbar, die über geeignete Drehmoment-Übertragungsmittel wie Rollen, Ketten oder dregleichen am Schienenkranz 30 selbst angreifen.

Auf dem Schienenkranz 30 des Drehgestells 16 sind drei Reihen 38,40,42 von Solarmodulen 14 befestigt. Die Solarmodule 14 einer Reihe 38,40,42 werden von zwei parallelen Querstreben 48,50 getragen, von denen die vordere untere Querstrebe 48 unmittelbar auf dem Schienenkranz 30 befestigt ist, während die obere hintere Querstrebe 50 von senkrechten Stützen 44 getragen wird, die auf dem Schienenkranz 30 aufragen. Auf den Querstreben 48,50 liegen die Solarmodule 14 nebeneinanderliegend auf, so dass sie an ihren vorderen Unterkanten von der Querstrebe 48 und ihren hinteren Oberkanten von der Querstrebe 50 getragen werden. Somit haben alle Solarmodule 14 einer Reihe 38,40,42 die gleiche Neigung und liegen in einer gemeinsamen Ebene. Da die Stützen 44 aller drei Reihen 38,40,42 gleich hoch sind, ergibt sich auch für die Solarmodule 14 unterschiedlicher Reihen 38,40,42 der gleiche Neigungswinkel, so dass die Modulflächen in drei unterschiedlichen Ebenen liegen, die im hier gezeigten Fall parallel zueinander stehen.

Die Reihen 38, 40, 42 von Solarmodulen 14 sind somit unmittelbar auf einer Montagefläche 52 montiert, in der der Schienenkranz 30 liegt. Die Drehachse des Drehgestells 16 fällt im vorliegenden Fall mit der Flächennormalen der Montagefläche 52 zusammen, so dass letztere eine Rotationsebene bildet, in bzw. auf welcher die Solarmodule 14 synchron gedreht werden. Wenngleich die Reihen 38,40,42 von Solarmodulen 14 hier auf dem Schienenkranz 30 selbst befestigt sind, kann die Montagefläche 52 durch eine Montageplatte gebildet werden, auf der die Reihen 38,40,42 an bestimmten Befestigungspunkten montiert sein können, oder weitere konzentrische Schienenkreise können zur Unterstützung der Reihen 38,40,42 innerhalb oder ausserhalb des Schienenkranzes 30 angeordnet sein. Wenngleich bei der hier gezeigten Montierung 10 die Neigungswinkel aller Solarmodule 14 der Gruppe 12 gegenüber der Montagefläche 52 gleich sind, ist es denkbar, dass die Solarmodule 14 unterschiedlicher Reihen 38,40,42 einen voneinander abweichenden Neigungswinkel aufweisen oder dass auch die Neigungswinkel innerhalb einer Reihe individuell verstellbar sind. Zu diesem Zweck sind die Reihen 38,40,42 mit einem geeigneten Stellantrieb zu versehen, der die Solarmodule 14 um eine horizontale Achse parallel zu den Querstreben 48,50 schwenkt.

Aus Gründen der Übersichtlichkeit wurde auf eine Darstellung einer solchen Abwandlung in den Figuren verzichtet.

Durch die Anordnung der Solarmodule 14 einer Reihe in einer gemeinsamen Ebene und durch die parallele Anordnung der beabstandeten Reihen 38,40,42 haben alle Solarmodule 14 der Gruppe 12 den gleichen Azimut, d.h. die gleiche Winkelausrichtung auf den Horizont. Der Azimut entspricht der Richtung der Projektion der Flächennormalen der Solarmodule 14 auf die Horizont-Ebene.

Das Drehgestell 16 kann mit Hilfe des Antriebs so zur Sonne gedreht werden, dass eine optimale Ausbeute bei der Energieumwandlung erreicht wird. Steht die Sonne so hoch, dass keine Beschattung der einzelnen Modulreihen untereinander auftreten kann, so wie es beispielsweise der Fall ist, wenn die Richtung der Sonneneinstrahlung mit der Blickrichtung des Betrachters in Fig. 1 zusammenfällt, ist eine optimale Winkelstellung des Drehgestells 16 erreicht, wenn der Azimut der Solarmodule 14 genau mit der Einfallsrichtung der Sonneneinstrahlung zusammenfällt. Durch eine geeignete Steuerung des Antriebs kann das Drehgestell 16 dem Lauf der Sonne während des Tages nachgeführt werden. Dies kann kontinuierlich durch ständige langsame Drehung der Antriebswelle erfolgen oder auch stufenweise in Intervallen, so dass ein ständiger Betrieb des Antriebsmotors vermieden wird. Es versteht sich, dass eine ähnliche Nachführung auch in Bezug auf die Neigung der Solarmodule 14 denkbar ist. Zu diesem Zweck kann auf die Konstruktionsprinzipien bekannter Nachführungen zurückgegriffen werden, wonach die Neigung der Modulfläche ebenfalls an den Sonnenstand anpaßbar ist.

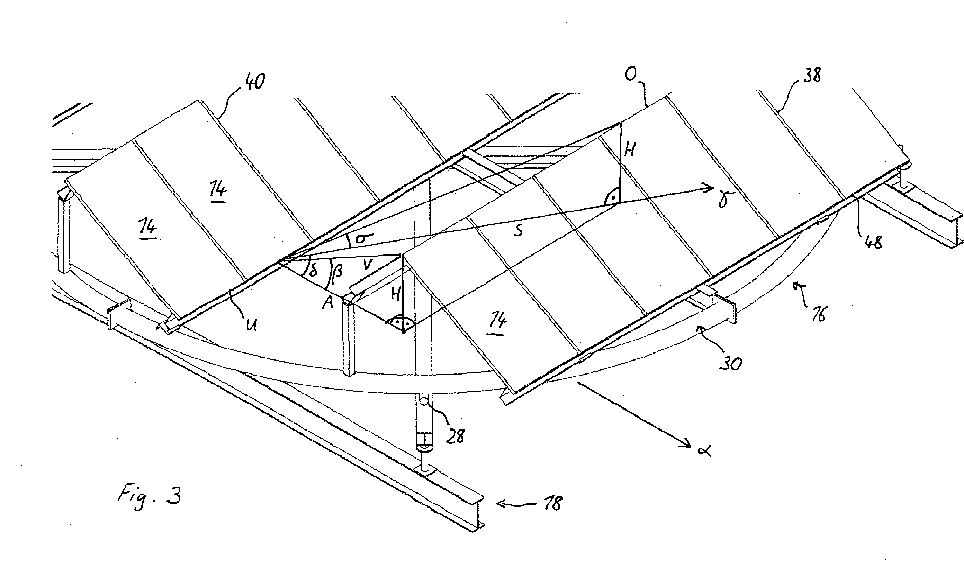

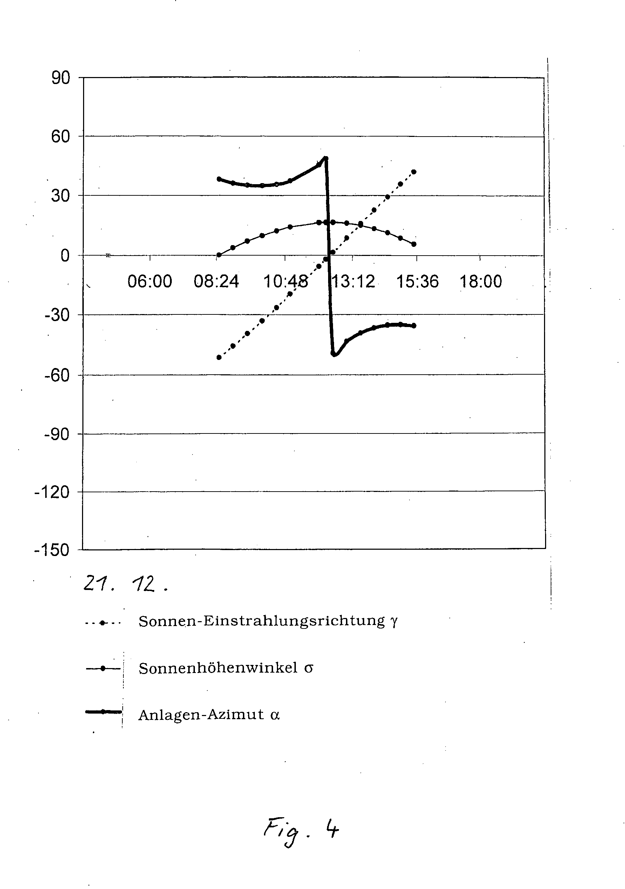

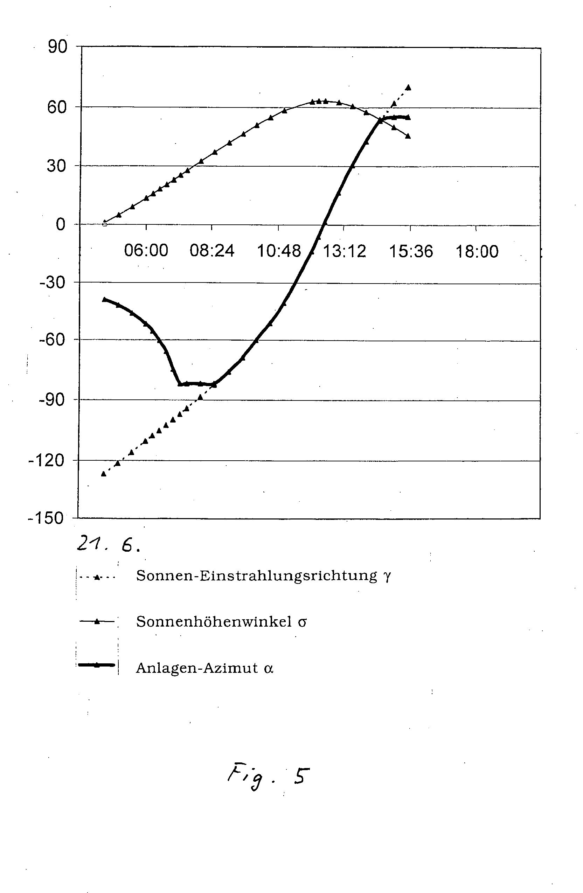

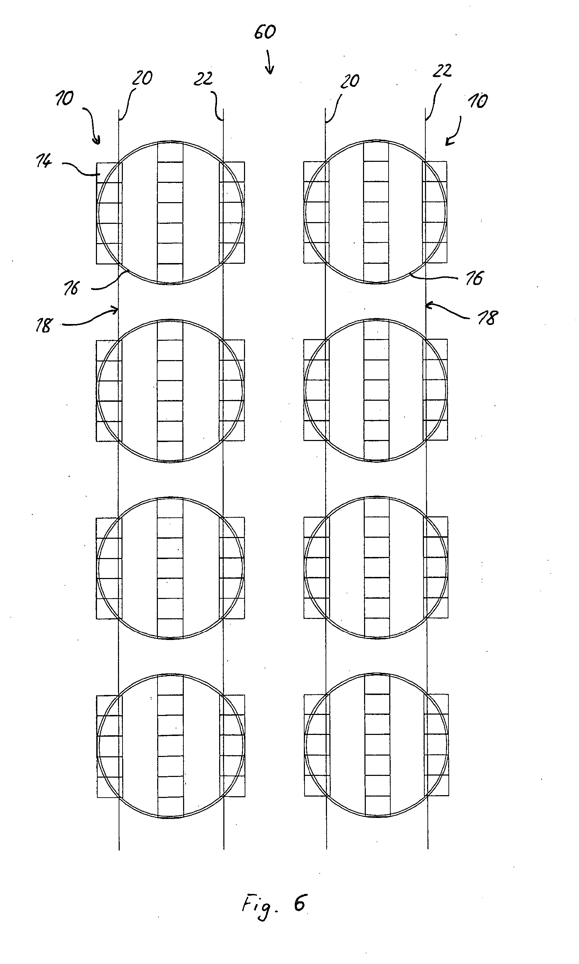

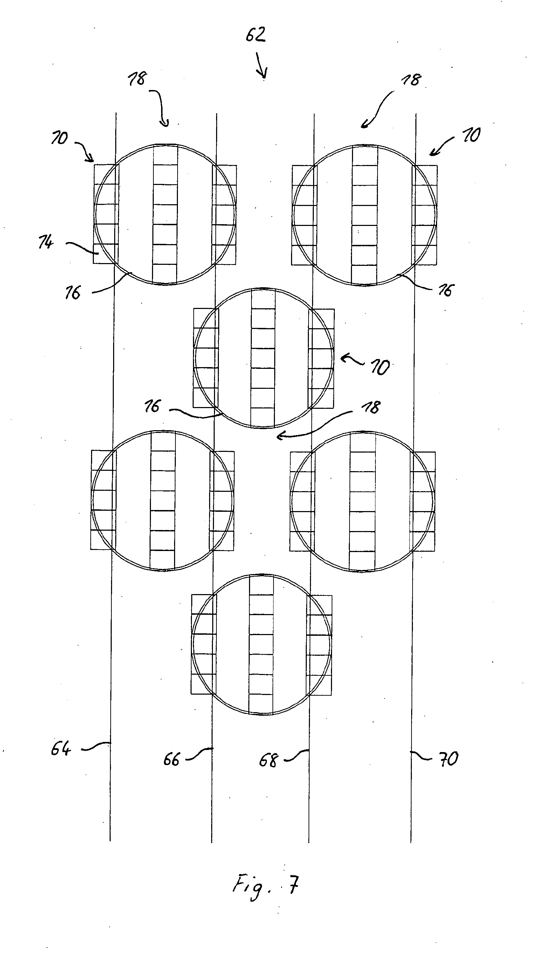

Bei extrem niedrigen Sonnenständen ist das oben beschriebene Nachführungsprinzip, nach welchem der Azimut der Solarmodule 14 in Übereinstimmung mit der Sonnen-Einfallsrichtung gebracht wird, nicht mehr optimal, da eine Abschattung der beiden hinteren Reihen 40,42 eintritt und lediglich die Solarmodule 14 der vorderen Reihe 38 optimal ausgerichtet sind. Die Effizienz der Montierung 10 läßt sich steigern, indem in einer derartigen Situation von diesem Prinzip abgewichen wird, wie im folgenden anhand von Fig. 3 erläutert werden soll.

In Fig. 3 fällt der Azimut $\alpha$ der Solarmodule 14 nicht mit der Richtung $\gamma$ der Sonneneinstrahlung zusammen, sondern zwischen der Richtung der Sonneneinstrahlung $\gamma$ und dem Azimut $\alpha$ wird in der Horizont-Ebene ein Differenzwinkel $\delta$ aufgespannt, der im folgenden als Ausrichtungswinkel bezeichnet wird. Die Solarmodule 14 der Gruppe 12 sind somit auf dem Drehgestell 16 um den Ausrichtungswinkel $\delta$ im Uhrzeigersinn aus der Sonne "herausgedreht". Hier und in der folgenden Beschreibung wird von einem Standort auf der Nordhalbkugel der Erde ausgegangen, so daß die Situation in Fig. 3 einer Stellung des Drehgestells 16 am Morgen entspricht. Der Winkel des Sonnenstandes über dem Horizont wird durch $\sigma$ bezeichnet, während ein Schatten-Grenzwinkel $\beta$ definiert ist als der Winkel zwischen der Horizontebene und einer Verbindungslinie V zwischen der Oberkante O der vorderen Reihe 38 und der Unterkante U der hinteren Reihe 40 in der Azimut-Ebene, d.h. der senkrechten Ebene, die sich in Richtung des Azimut $\alpha$ der Solarmodule 14 erstreckt und die die Modul-Flächen senkrecht schneidet.

Ist der Sonnenstand $\sigma$ über dem Horizont höher als der Schatten-Grenzwinkel $\beta$, kann keine Abschattung der hinteren Modulreihe durch die vorderen Solarmodule 14 auftreten, da die Schattenlinie der Oberkante O der vorderen Reihe 38 vor die Unterkante U der hinteren Reihe 40 fällt. In dieser Situation ist eine Stellung der Solarmodule 14 optimal, in welcher der Azimut $\alpha$ des Drehgestells 16 mit der Sonneneinfallsrichtung $\gamma$ zusammenfällt. Wird der Sonnenstand $\sigma$ niedriger als der Schatten-Grenzwinkel $\beta$, so läßt sich durch den Antrieb ein Ausrichtungswinkel $\delta$ einstellen, bei welchem das Drehgestell 16 gerade so weit aus der Sonne herausgedreht ist, dass die Schattenlinie der vorderen Oberkante O die hintere Unterkante U verfehlt, entsprechend der in Fig. 3 gezeigten Situation.

Mit H als der Höhendifferenz zwischen der Oberkante O und der Unterkante U, A als dem kürzesten horizontalen Abstand zwischen O und U in Richtung des Azimuts $\alpha$ und S als dem horizontalen Abstand zwischen O und U in der Sonneneinfallsrichtung $\gamma$ ergeben sich nach Fig. 3 die folgenden trigonometrischen Beziehungen:

$$\tan \beta = H \ / \ A$$

$$\tan \sigma = H \ / \ S$$

$$\cos \delta = A \ / \ S = \tan \sigma \ / \ \tan \beta$$

$$\delta = \arccos (\tan \sigma' / \tan \beta) \qquad\qquad (1)$$

Zur Erreichung einer optimalen Energieausbeute über den Tagesverlauf hinweg läßt sich die Anlage so steuern, dass bei Tagesanbruch, wenn die Sonne unmittelbar über dem Horizont steht, das Drehgestell 16 um einen Ausrichtungswinkel δ aus der Richtung der Sonneneinstrahlung nach Süden herausgedreht wird, so dass keine Abschattung der Reihen von Solarmodulen 14 eintritt. Überschreitet die Höhe des Sonnenstandes σ den Schatten-Grenzwinkel β, wird zu einer Nachführung übergegangen, bei welcher ein Hineindrehen in die Sonnenrichtung erfolgt, bis der Azimut α mit der Sonneneinfallsrichtung γ zusammenfällt und δ = 0 wird. Im Tagesverlauf erfolgt die Nachführung so, dass stets die Richtung des Azimuts α der Solarmodule 14 an die Veränderung der Sonneneinfallsrichtung γ angepaßt wird. Sinkt die Sonne so weit, dass die Grenzbedingung σ < β eintritt, erfolgt wieder ein "Herausdrehen" nach dem oben beschriebenen Schema. Nach Erreichen des Ausrichtungswinkels δ kann gegebenenfalls auf eine Nachführung verzichtet werden, da diese bei dem extremen seitlichen Einfall auf die Solarmodule 14 nicht mehr effizient ist. Die gesamte Steuerung kann zeitlich vorprogrammiert sein und gegebenenfalls durch einen Sensor, der die Sonnenstandsrichtung überprüft, korrigiert werden. Ferner kann die Elektronik eine Diagnoseeinheit umfassen, die Fehlfunktion detektiert und meldet oder dokumentiert.

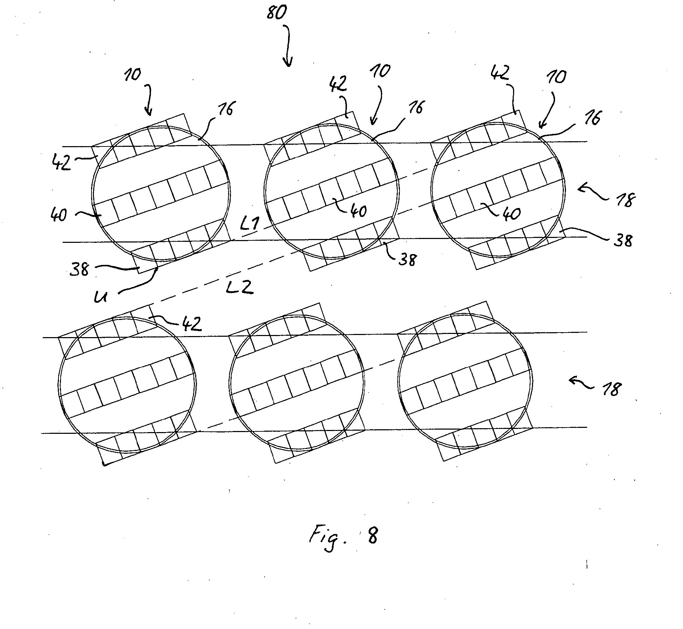

Die oben beschriebene Betriebsweise der Montierung 10 ist in Fig. 4 anhand eines Diagramms dargestellt, in welchem die zeitliche Veränderung des Sonnenhöhenwinkels σ, der Sonneneinfallsrichtung γ (mit γ = 0 in Richtung des Meridians) und des Azimut α der Solarmodule 14 dargestellt sind, und zwar für den 21. Dezember. Die Tageszeit ist in der horizontalen Achse aufgetragen, während an der senkrechten Achse der jeweilige Winkel in Grad ablesbar ist. Da die Sonne sich an diesem Tag nicht weit über den Horizont erhebt und der Sonnenhöhenwinkel σ stets kleiner bleibt als der Schatten-Grenzwinkel β, wird das Drehgestell 16 zwischen zwei extremen Stellungen gedreht, wobei in der ersten Extremstellung am Vormittag der Azimut α des Drehgestells 16 erheblich größer ist als der Winkel γ, bis bei Überschreiten des Meridians im Süden die Stellung durch Drehen des Antriebs gewechselt wird (zu erkennen an dem Nulldurchgang der durchgezogenen Linie zur Bezeichnung des Verlaufs von α).

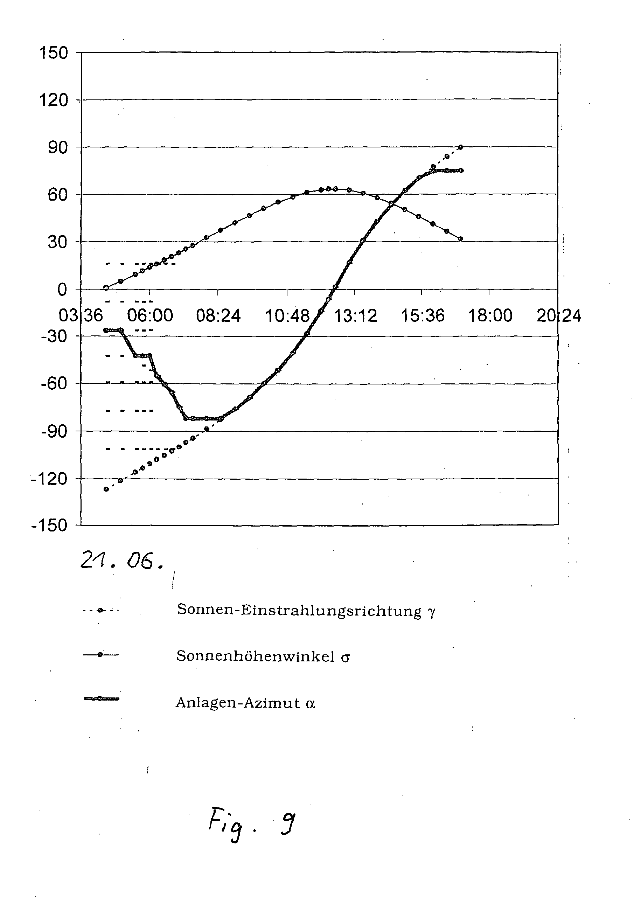

Am 21. Juni (siehe Fig. 5) herrscht eine völlig andere Situation, da sich die Sonne hier sehr bald steil über den Horizont erhebt und der Schatten-Grenzwinkel beta überschritten wird. Dann wird das Drehgestell 16 so gedreht, dass der Anlagen-Azimut α mit der Sonnen-Einstrahlungsrichtung γ zusammenfällt. Diese "hineingedrehte" Stellung wird über einen längeren Tagesverlauf beibehalten, bis kurz vor Sonnenuntergang ein Ausrichtungswinkel δ nach Gleichung (1) durch Herausdrehen des Drehgestells 16 eingestellt wird, der eine Abschattung der Solarmodule vermeidet. Flache Teilstücke im Kurvenverlauf des Anlagen-Azimut α (in Fig. 5 etwa zwischen 7:00 und 8:30 morgens) ergeben sich bei der Ansteuerung der nachfolgend beschriebenen Anlagen, die mehrere Drehgestelle 16 umfassen und auf eine bestimmte Art und Weise aufeinander ausgerichtet werden, wie insbesondere im Zusammenhang mit Fig. 9 noch näher erläutert werden wird.

Mehrere der zuvor beschriebenen Montierungen 10 lassen sich zu einer Solaranlage 60 zusammenfassen, wie sie in Fig. 6 gezeigt ist. Diese Solaranlage 60 umfaßt acht Montierungen 10 für Gruppen von Solarmodulen 14 gemäß Fig. 1 und 2, die hier in der Draufsicht zu erkennen sind, wobei die Diagonalträger 26 der Basen 18 und die Mittelträger 34 der Drehgestelle 16 der Übersichtlichkeit halber nicht eingezeichnet sind. Jeweils vier Drehgestelle 16 sind auf einer gemeinsamen Basis 18 angeordnet, wobei die vier Stahlschienen 20,22 der beiden Basen 18 genau parallel liegen und die Drehgestelle 16 der beiden Basen 18 auf solche Weise benachbart sind, dass die Drehgestelle 16 auf den Schnittpunkten eines Rechteckrasters angeordnet sind. Alle Drehgestelle 16 können synchron miteinander durch ihre jeweiligen Antriebe gedreht werden, oder es kann auch einziger Antrieb zur Drehung aller Drehgestelle 16 vorgesehen sein. In diesem Fall müssen die Drehgestelle 16 durch geeignete Mittel wie etwa Zugorgane oder dergleichen mechanisch gekoppelt sein.

Fig. 7 zeigt eine von Fig. 6 abweichende Anordnung von Montierungen 10 in einer Solaranlage 62. In dieser dienen ebenfalls vier parallele Stahlschienen 64,66,68,70 als Basen 18. Jede der Montierungen 10 benutzt jeweils zwei Schienen 64,66,68,70 als ihre Basis 18, und zwar auf solche Weise, dass die beiden Drehgestelle 16 der obersten Reihe in Fig. 7 jeweils auf den beiden linken und rechten Schienenpaaren 64,66 sowie 68, 70 als Basen 18 angebracht sind, während das darunter angeordnete Drehgestell 16 um den halben Abstand der beiden obersten Drehgestelle 16 gegenüber diesen versetzt ist, d. h., in der Breitenrichtung mittig zwischen ihnen angeordnet ist und die beiden mittleren Schienen 66,68 als Basis 18 nutzt. Diese Anordnung wiederholt sich in der dritten und vierten Reihe in Fig. 7 und kann nach oben und unten auf den Schienen 64,66,68,70 wiederholt werden.

Zu den Zeiten, an denen die Sonne so niedrig steht, daß eine Verschattung von Solarmodulen 14 droht, insbesondere auch eine Abschattung benachbarter Drehgestelle 16, läßt sich die Anlage so steuern, daß Reihen von Solarmodulen 14 verschiedener Drehgestelle 16 miteinander fluchten, wie im folgenden erläutert werden soll. Fig. 8 zeigt eine Solaranlage 80, die sechs Drehgestelle 16 umfaßt, die in zwei Reihen nebeneinanderliegend auf zwei Basen 18 angeordnet sind. Alle Drehgestelle 16 sind im gleichen Azimut ausgerichtet, also in der gleichen Winkelstellung in der horizontalen Ebene. Im Gegensatz zu den Fig. 6 und 7 ist der Azimut hier jedoch so gewählt, dass Reihen von Solarmodulen 14 einander benachbarter Drehgestelle 16 miteinander fluchten, also auf einer gemeinsamen Geraden liegen. Betrachtet man beispielsweise die obere Basis 18, so liegen die unterste, d. h. vordere Reihe 38 des linken Drehgestells 16, die mittlere Reihe 40 des mittleren Drehgestells 16 und die hintere (obere) Reihe 42 des rechten Drehgestells 16 auf einer gemeinsamen Geraden L1, die in Fig. 7 gestrichelt markiert ist und durch die Unterkanten U der drei Reihen 38,40,42 von Solarmodulen 14 verläuft. Das gleiche gilt für die obere (hintere) Reihe 42 des linken Drehgestells 16 der unteren Basis 18, die vordere Reihe 38 des mittleren Drehgestells 16 der oberen Basis 18 und die mittlere Reihe 40 des rechten Drehgestells 16 der oberen Basis 18, die auf der zu L1 parallelen Geraden L2 liegen. Durch dieses Fluchten der Anordnung der Reihen von Solarmodulen 14 läßt sich auf vorteilhafte Weise eine Abschattung vermeiden.

Es sind weitere Stellungen möglich, in denen verschiedene Reihen miteinander fluchten, wie beispielsweise eine Stellung, in der eine vordere Reihe 38 mit der hinteren Reihe 42 des auf der gleichen Basis 18 benachbarten Drehgestells 16 fluchtet. Die Drehgestelle 16 lassen sich so steuern, dass aus einer ersten fluchtenden Stellung, wie sie in Fig. 8 gezeigt und weiter oben beschrieben ist, unmittelbar die nächste fluchtende Stellung angefahren wird, bis wiederum eine weitere Stellung in Bezug auf den Sonnenstand günstiger ist. Diese Art der Ansteuerung bestimmter Stellungen ist in Fig. 9 für den Zeitraum von ca. 4:00 Uhr bis 7:00 Uhr morgens dargestellt.

Im einzelnen hängt die Steuerung des Verfahrwegs der Drehgestelle 16 durch den Antrieb stets von geometrischen Faktoren ab, die durch die Anlagenkonstruktion bedingt sind, wie insbesondere der Höhe und dem Neigungswinkel der Solarmodule 14, dem Abstand der Reihen, der sich daraus ergebene Schatten-Grenzwinkel β, den Abständen der Drehachsen der Drehgestelle 16, einer gegebenenfalls vorhandenen Neigung der Dachfläche und deren Ausrichtung zum Horizont.

**Patentansprüche**

1. Montierung (10) für eine Gruppe (12) von Solarmodulen (14), die auf einer gemeinsamen Montagefläche (52) montiert sind und deren Modulflächen in mindestens zwei verschiedenen Ebenen liegen, die gegenüber der Montagefläche (52) geneigt sind, **dadurch gekennzeichnet, dass** die Montagefläche (52) durch ein Drehgestell (16) gebildet wird, das durch einen Antrieb (32) drehbar auf einer Basis (18) angeordnet ist.

2. Montierung gemäß Anspruch 1, **dadurch gekennzeichnet, dass** die Montagefläche (52) eine Ebene ist, deren Flächennormale etwa mit der Drehachse des Drehgestells (16) zusammenfällt.

3. Montierung gemäß Anspruch 1 oder 2, **dadurch gekennzeichnet, dass** das Drehgestell (16) einen etwa kreisförmigen Schienenkranz (30) umfasst, auf dem die Solarmodule (14) angebracht sind.

4. Montierung gemäß Anspruch 3, **dadurch gekennzeichnet, dass** der Schienenkranz (30) auf Rollen (28) gelagert ist, die an der Basis (18) angebracht sind.

5. Montierung gemäß einem der Anspruch 3 oder 4, **dadurch gekennzeichnet, dass** der Antrieb (32) fest mit der Basis (18) verbunden ist und ein durch einen Motor angetriebene Welle zur Übertragung eines Drehmoments auf den Schienenkranz (30) aufweist.

6. Montierung gemäß einem der vorhergehenden Ansprüche, **dadurch gekennzeichnet, dass** der Neigungswinkel der Solarmodule (14) in Bezug auf die Montagefläche (52) verstellbar ist.

7. Montierung gemäß einem der vorhergehende Ansprüche, **dadurch gekennzeichnet, dass** die Solarmodule (14) in voneinander beabstandeten Reihen (38, 40, 42) auf der Montagefläche (52) angeordnet sind, und dass alle Solarmodule (14) innerhalb einer Reihe den gleichen Neigungswinkel mit der Montagefläche (52) einschließen.

8. Montierung gemäß Anspruch 7, **dadurch gekennzeichnet, dass** die Solarmodule (14) verschiedener Reihen (38,40,42) den gleichen Neigungswinkel aufweisen.

9. Montierung gemäß einem der vorhergehenden Ansprüche, **dadurch gekennzeichnet, dass** die Solarmodule (14) der Gruppe (12) etwa im gleichen Azimut ausgerichtet sind.

10. Montierung gemäß Anspruch 9, **dadurch gekennzeichnet, dass** der Antrieb derart steuerbar ist, dass das Drehgestell (16) in Abhängigkeit vom gegenwärtigen Sonnenstand in einen Ausrichtungswinkel ($\delta$) gedreht wird, der

zwischem dem Azimut (α) der Solarmodule (14) und der Richtung der Sonneneinstrahlung (γ) aufgespannt wird, welcher Ausrichtungswinkel (δ) so bemessen ist, dass eine Abschattung eines hinter einem vorderen Solarmodul (14) angeordneten hinteren Solarmoduls (14) vermieden wird.

**11.** Montierung gemäß Anspruch 10, **dadurch gekennzeichnet, dass** der Antrieb derart steuerbar ist, dass das Drehgestell (16) in einen Ausrichtungswinkel (δ) gedreht wird, der sich aus der folgenden Beziehung ergibt:

$$\delta = \arccos (\tan \sigma \,/\, \tan \beta) \qquad\qquad (1)$$

mit:

σ = Höhenwinkel des Sonnenstandes über dem Horizont, und
β = Schatten-Grenzwinkel,

wobei der Schatten-Grenzwinkel (β) definiert ist als der Winkel zwischen der Horizont-Ebene und der Verbindungslinie (V) zwischen der Oberkante (O) des vorderen Solarmoduls (14) und der Unterkante (U) des hinteren Solarmoduls (14) in der Ebene des Azimut (α) der Solarmodule (14).

**12.** Solaranlage (60, 62, 80), umfassend eine Anzahl von Montierungen (10) für Gruppen von Solarmodulen (14) gemäss einem der vorhergehenden Ansprüche.

**13.** Solaranlage gemäß Anspruch 12, **dadurch gekennzeichnet, dass** mehrere der Drehgestelle (16) nebeneinander auf einer gemeinsamen Basis (18) angeordnet sind.

**14.** Solaranlage gemäß Anspruch 16, **dadurch gekennzeichnet, dass** die gemeinsame Basis (18) Schienen (20,22,64,66,68,70) umfasst, auf denen die Drehgestelle (16) angeordnet sind.

**15.** Solaranlage gemäß Anspruch 17, **gekennzeichnet durch** mehrere Basen (18), deren Schienen (20,22,64,66,68,70) parallel verlaufen.

**16.** Solaranlage gemäß einem der Ansprüche 12 bis 15, **gekennzeichnet durch** eine zentrale Steuerung zur synchronen Ausrichtung mehrerer Drehgestelle (16) im gleichen Azimut (α).

**17.** Solaranlage gemäß Anspruch 19, **dadurch gekennzeichnet, dass** die Steuerung dazu eingerichtet ist, den Azimut (α) der Drehgestelle (16) so zu wählen, dass Reihen (38,40,42) von Solarmodulen (14) einander benachbarter Drehgestelle (16) miteinander fluchten.

**18.** Verfahren zur Steuerung einer Montierung für eine Gruppe von Solarmodulen gemäß Anspruch 11, **dadurch gekennzeichnet, dass** das Drehgestell (16) in Abhängigkeit vom gegenwärtigen Sonnenstand in einen Ausrichtungswinkel (δ) gedreht wird, der zwischen dem Azimut (α) der Solarmodule (14) und der Richtung der Sonneneinstrahlung (γ) aufgespannt wird, welcher Ausrichtungswinkel (δ) so bemessen ist, dass eine Abschattung eines hinter einem vorderen Solarmodul (14) angeordneten hinteren Solarmoduls (14) vermieden wird.

**19.** Verfahren gemäß Anspruch 21, **dadurch gekennzeichnet, dass** das Drehgestell (16) in Abhängigkeit vom gegenwärtigen Sonnenstand in einen Ausrichtungswinkel (δ) gedreht wird, der sich aus den folgenden Beziehungen ergibt:

$$\delta = \arccos (\tan \sigma \,/\, \tan \beta) \qquad (1) \qquad \text{für } \sigma < \beta,$$

und

$$\delta = 0 \qquad\qquad\qquad \text{für } \sigma > \beta,$$

mit:

σ = Höhenwinkel des Sonnenstandes über dem Horizont, und
β = Schatten-Grenzwinkel,

wobei der Schatten-Grenzwinkel (β) definiert ist als der Winkel zwischen der Horizont-Ebene und der Verbindungslinie (V) zwischen der Oberkante (O) des vorderen Solarmoduls und der Unterkante (U) des dahinter angeordneten Solarmoduls (14) in der Ebene des Azimut (α) der Solarmodule (14).

Fig. 1

Fig. 2

Fig. 3

EP 1 788 322 A1

21. 12.

··◆·· Sonnen-Einstrahlungsrichtung γ

─◆─ Sonnenhöhenwinkel σ

━◆━ Anlagen-Azimut α

Fig. 4

21. 6.

·· ▲ ··   Sonnen-Einstrahlungsrichtung γ

── ▲ ──   Sonnenhöhenwinkel σ

━━▲━━   Anlagen-Azimut α

Fig. 5

Fig. 6

Fig. 7

Fig. 8

21. 06.

- - - • - -    Sonnen-Einstrahlungsrichtung γ

— • —    Sonnenhöhenwinkel σ

Anlagen-Azimut α

Fig. 9

**Europäisches Patentamt**

# EUROPÄISCHER RECHERCHENBERICHT

Nummer der Anmeldung

EP 06 02 2871

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 02/097341 A (SUN TRUST L L C [US]) 5. Dezember 2002 (2002-12-05) * Seite 9, Zeile 23 - Seite 13, Zeile 14 * * Seite 15, Zeile 11 - Zeile 16 * * Seite 19, Zeile 18 - Seite 23, Zeile 9 * * Seite 24, Zeile 18 - Seite 25, Zeile 4; Abbildungen 1-4,17,18,21,26 * | 1-13,16, 17 | INV. F24J2/54 H01L31/042 F24J2/40 |
| A | | 14,15, 18,19 | |
| | ----- | | |
| X | DE 79 24 579 U1 (WEBER, HILMAR, 7636 RINGSHEIM) 20. Dezember 1979 (1979-12-20) * Seite 5, Zeile 4 - Seite 6, Zeile 26; Abbildungen 1,2 * | 1-9 | |
| | ----- | | |
| X | US 4 109 638 A1 (MATLOCK WILLIAM C ET AL) 29. August 1978 (1978-08-29) * Spalte 3, Zeile 46 - Spalte 6, Zeile 28; Abbildungen 1-6,9-13 * | 1-9 | |
| | ----- | | |
| A | WO 2005/028969 A (ELETTROPIEMME SNC DI PEGORETTI [IT]; PEGORETTI MARCELLO [IT]) 31. März 2005 (2005-03-31) * Seite 7, Zeile 25 - Seite 13, Zeile 14; Abbildungen 1-13 * | 1-19 | RECHERCHIERTE SACHGEBIETE (IPC) F24J H01L |
| | ----- | | |
| A | EP 0 384 839 A1 (GALLOIS MONTBRUN ROGER GALLOIS MONTBRUN ROGER [FR]) 29. August 1990 (1990-08-29) * Spalte 5, Zeile 12 - Spalte 8, Zeile 32; Abbildungen 1-8 * | 1-9 | |
| | ----- | | |
| A | US 4 883 340 A1 (DOMINGUEZ RICHARD L [US]) 28. November 1989 (1989-11-28) * Spalte 8, Zeile 9 - Spalte 16, Zeile 9; Abbildungen 1-9 * | 1-19 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 15. März 2007 | Beltzung, Francis |

EPO FORM 1503 03.82 (P04C03)

**Europäisches Patentamt**

**EUROPÄISCHER RECHERCHENBERICHT**

Nummer der Anmeldung

EP 06 02 2871

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2004/238025 A1 (SHINGLETON JEFFERSON G [US]) 2. Dezember 2004 (2004-12-02) * Seite 2, Absatz 41 - Seite 6, Absatz 74; Abbildungen 1-33 * | 1-19 | |
| A | US 4 365 618 A1 (JONES DEDGER) 28. Dezember 1982 (1982-12-28) * Spalte 5, Zeile 62 - Spalte 9, Zeile 32; Abbildungen 1-8 * | 1-19 | |
| A | WO 2004/083741 A (POWERLIGHT CORP [US]; SHINGLETON JEFFERSON G [US]) 30. September 2004 (2004-09-30) * Seite 7, Absatz 44; Abbildung 7 * | 1-19 | |
| A | DE 20 2005 002411 U1 (A & F STAHL UND MASCHB GMBH [DE]) 21. April 2005 (2005-04-21) * Seite 4, Absatz 39 - Seite 5, Absatz 46; Abbildungen 1-6 * | 1-19 | **RECHERCHIERTE SACHGEBIETE (IPC)** |
| A | JP 61 076848 A (HITACHI LTD) 19. April 1986 (1986-04-19) * Zusammenfassung; Abbildungen 1,2,7 * | 1-19 | |
| A | JP 61 194511 A (KYOCERA CORP; TAISEI CORP) 28. August 1986 (1986-08-28) * Zusammenfassung; Abbildungen 1,2 * | 1-19 | |

Der vorliegende Recherchenbericht wurde für alle Patentansprüche erstellt

| Recherchenort | Abschlußdatum der Recherche | Prüfer |
|---|---|---|
| Den Haag | 15. März 2007 | Beltzung, Francis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 02 2871

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-03-2007

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO 02097341 | A | | 05-12-2002 | BR | 0117019 | A | 20-04-2004 |
| | | | | CA | 2442143 | A1 | 05-12-2002 |
| | | | | CN | 1509398 | A | 30-06-2004 |
| | | | | EP | 1390673 | A1 | 25-02-2004 |
| | | | | JP | 2004527723 | T | 09-09-2004 |
| | | | | MX | PA03010621 | A | 09-03-2004 |
| | | | | US | 2003051750 | A1 | 20-03-2003 |
| | | | | US | 2002179138 | A1 | 05-12-2002 |
| DE 7924579 | U1 | | 20-12-1979 | KEINE | | | |
| US 4109638 | A1 | | | KEINE | | | |
| WO 2005028969 | A | | 31-03-2005 | AU | 2003274702 | A1 | 11-04-2005 |
| EP 0384839 | A1 | | 29-08-1990 | AU | 623226 | B2 | 07-05-1992 |
| | | | | AU | 5013690 | A | 30-08-1990 |
| | | | | CA | 2010708 | A1 | 23-08-1990 |
| | | | | DE | 69008391 | D1 | 01-06-1994 |
| | | | | DE | 69008391 | T2 | 17-11-1994 |
| | | | | ES | 2055876 | T3 | 01-09-1994 |
| | | | | FR | 2643510 | A1 | 24-08-1990 |
| | | | | JP | 2249281 | A | 05-10-1990 |
| | | | | OA | 9165 | A | 31-03-1992 |
| | | | | US | 5022929 | A | 11-06-1991 |
| US 4883340 | A1 | | | KEINE | | | |
| US 2004238025 | A1 | | 02-12-2004 | KEINE | | | |
| US 4365618 | A1 | | | KEINE | | | |
| WO 2004083741 | A | | 30-09-2004 | AU | 2004221388 | A1 | 30-09-2004 |
| | | | | CA | 2518278 | A1 | 30-09-2004 |
| | | | | EP | 1604407 | A2 | 14-12-2005 |
| | | | | JP | 2006521009 | T | 14-09-2006 |
| | | | | KR | 20050110010 | A | 22-11-2005 |
| DE 202005002411 | U1 | | 21-04-2005 | EP | 1691423 | A2 | 16-08-2006 |
| JP 61076848 | A | | 19-04-1986 | JP | 1850243 | C | 21-06-1994 |
| | | | | JP | 5056671 | B | 20-08-1993 |
| JP 61194511 | A | | 28-08-1986 | JP | 1952362 | C | 28-07-1995 |
| | | | | JP | 6077218 | B | 28-09-1994 |

EPO FORM P0461

Für nähere Einzelheiten zu diesem Anhang : siehe Amtsblatt des Europäischen Patentamts, Nr.12/82